# EUROPEAN PATENT APPLICATION

(11) **EP 1 878 495 A1**
(43) Date of publication of application: **16.01.2008**
(21) Application number: 06014679.2
(22) Date of filing: 14.07.2006
(51) Int. Cl.: B01L 3/00, B01L 7/00, B01F 13/00

(54) **Analytical device for thermally treating a fluid and/or monitoring a property thereof**

(71) Applicant: Roche Diagnostics GmbH, 68298 Mannheim (DE); F.HOFFMANN-LA ROCHE AG, 4070 Basel (CH)
(72) Inventor: Sarofim, Emad, 6332 Hagendorn (CH)

(57) **Abstract**

A device for thermally treating a fluid and/or for monitoring a property thereof, said device comprising a reaction chamber which is connected to a port via an inlet channel and to an outlet channel, wherein one of the large side walls of said chamber has a protrusion, is disclosed. The device can be used advantageously in reliable analyses in automated procedures.

## Description

### Field of the invention

The present invention relates to a fluidic device for thermally treating a fluid or/and determining a property of said fluid, said device having a chamber with improved flow characteristics, a method of use of said device, a method for manufacture of said device, and a system including said device.

The field of application of the fluidic device according to the invention is mainly in analyzing fluid samples, for instance in health care, for the analysis of nucleic acids. The device has improved fluidic behavior and is easy to produce.

### Background of the invention

Particularly in analytical laboratories there is a great interest in conducting analysis in a convenient, safe and reliable way. Particular problems are the contamination of reagents, samples and devices for performing an analysis by the environment and the contamination of the environment by reagents or samples. Therefore devices have been proposed for the analysis of a sample and/or reagents that minimize the contamination of the environment.

In EP 0 318 256 there is shown a device comprising a chamber through which the fluid is forced. The width of the chamber increases from the inlet port to the outlet port of the chamber. This embodiment has severe disadvantages as it allows gaseous bubbles to be formed and remain in the chamber. Bubbles lead to false positive or negative measurements when monitoring the properties of a fluid in the chamber, as detectors used for monitoring cannot easily discriminate a gas from a liquid.

In WO 01/017683 describes a device comprising a bent chamber which declares to be filled rather bubble free filling. A wall being vertical to the heat transfer wall serves as wall for measuring an optical property within the fluid present in the chamber. The fluid observation through this wall has, however, mainly the disadvantage, that the respective window is small, making the device insensitive, e.g., in respect to light yield.

In US 5.856.174 there is disclosed a device having one or more chambers and channels to perform nucleic acid purification and amplification. This device has the problem that gaseous bubbles are easily retained in the chambers, leading to false results. In addition, the patent does not disclose amplification and detection in a single chamber.

In WO 93/22058 there is disclosed a device comprising several chambers with means for thermally controlling the temperature of each chamber. A fluid is moved between the chambers to assume different temperatures as required for conducting PCR. The device further contains a detection chamber separated from the PCR chambers that comprise bifurcated channels. This device requires separation of amplification and detection and does not allow monitoring the progress of the formation of amplification products during amplification (no real-time-PCR is possible).

EP 1 208 189 and US 6.664.104 disclose devices that propose separate fluidic channels and complex mechanisms to hinder waste fluid from entering and flowing through the chambers designed for amplification and detection. The US patent also describes acute protrusions in a chamber for lyzing and destroying sample components, e.g., cells, in sample preparation.

It was an object of the present invention to provide a device with improved properties over the devices according to the prior art, particularly a device with reduced liquid volume requirement, and with thermal treatment and monitoring functions combined in one chamber.

### Summary of the invention

A first subject of the invention is a device for thermally treating a fluid or/and for monitoring a property of said fluid, wherein the device comprises a reaction chamber having a length being in the range of 0.5 mm to 20 mm, a width being in the range of 0.5 mm to 20 mm and a depth being in the range of 0.1 mm to 2 mm and said reaction chamber is connected through a port to an inlet channel for providing said reaction chamber with said fluid and to an outlet channel for removing said fluid, parts or components derived from said fluid, e.g., a gas, from said reaction chamber, wherein in the section between the minimum and maximum width of the chamber at least one protrusion having a height of 50 % to 100 % of reaction chamber depth and a width of 1 % to 80 % of the reaction chamber width is located within the chamber.

The reaction chamber is further defined by comprising a space-apart opposing first wall and a second wall and two side walls connecting the first and second opposing walls. One wall, the first or second wall facing the location of detection, is preferably light transparent, whereby the other wall, the second or first wall on the opposition direction consists of a thermoconducting material, e.g., is a thin sealing foil.

The protrusion containing reaction chamber is further defined by being a flat, preferably almond- or olive-shaped container. The length to with ratio is in range of 0.7 to 15, more preferred 1 to 5. The length to depth ratio of said chamber is in a range of 1 to 50, more preferred 1 to 20.

The inlet and outlet channel are accessing the chamber at the corresponding ports. The end of the chamber has a width of 0.05 to 3 mm, most preferred 0.05 to 1 mm and a channel width to channel depth ratio of 0.2 to 5. The channels are fluid pathways leading fluid in, respectively out of the chamber.

Fluids according to the instant invention are liquids, gases, solvent solutions, suspensions and the like.

Furthermore, the protrusion is preferably located adjacent to the port of the inlet channel for providing fluids to the reaction chamber. Alternatively or in addition a second protrusion may be located adjacent to the port of the outlet channel for removing a fluid or gas component. Moreover, more than two, e.g., several protrusions may be present in one reaction chamber.

The reaction chamber according to the invention might, e.g., be formed from a first substantially planar wall (plan parallel to the length-width plane), a second extended wall which is disposed opposite to said first wall, said second wall preferably being light transparent, wherein the distance between said first and said second wall is maximal in the range of 0.1 and 4 mm. The first and second wall of the chamber can be substantially planar areas (mainly being plan parallel to the length-width plane) or may be planar in the centre of the area and rounded at the corners of the chamber, or may be rounded (forming a concave or semi concave chamber). The first and second wall may be connected by a third and a fourth wall linking the first and second wall together, wherein at least one of said first and second walls comprise at least one protrusion, e.g., dividing the space around the inlet port of the reaction chamber to cause a uniform flow velocity field over said inlet port space.

According to another embodiment of the invention the protrusion present in at least one of said first and second walls is located at a position adjacent to the outlet port of the reaction chamber, so that a uniform flow velocity field over said outlet port space is caused.

A second subject of the invention is a method for manufacturing a device according to the invention comprising
- a molding step including
   a) providing a first mold reflecting a shape of a part of said chamber consisting of a second wall, third and fourth wall and a protrusion,
   b) injecting into said first mold a thermoplastic material in liquefied form,
   c) waiting until the material of step a) has become at least partially solid,
- removing the result of said molding step from said mold,
- sealing said part of said chamber by a sealing foil to provide a first wall.

Another subject of the invention is a system for thermally treating a fluid and/or for monitoring properties of said fluid, comprising
- a device according to the invention,
- an instrument for thermally treating the fluid or for monitoring properties of the fluid comprising
   - a heater located adjacent to said first wall, and
   - a property monitor unit optically connected to said second wall.

The property monitor unit can measure at least one of the following optical properties of the fluid: Fluorescence, absorption, polarization, fluorescence polarization, fluorescence life-time, scattering or turbidity, luminescence. The property observed depends on the assay and detection scheme, e.g., PCR assays according to the TaqMan format preferably uses fluorescence measurement.

Another subject of the invention is the use of a device according to the invention for the analysis of a fluid.

Still another subject of the invention is a method of analysis of a fluid or components thereof using one or more reagents comprising
- providing a device according to the invention or a system according to the invention,
- introducing the fluid into a chamber of said device, and
- thermally treating said fluid in said chamber of said device,
- monitoring a property of said fluid in said chamber of said device, and
- using a change of said property for the analysis of said fluid.

### Brief description of the drawings

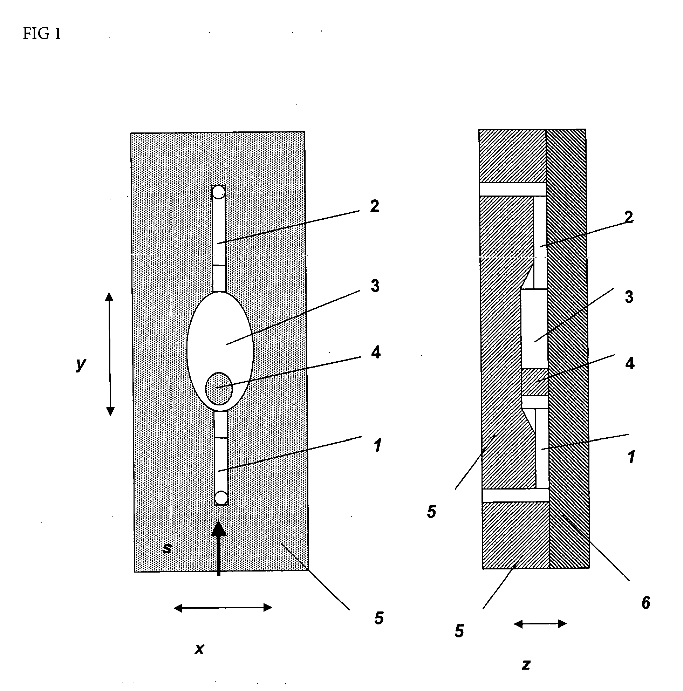

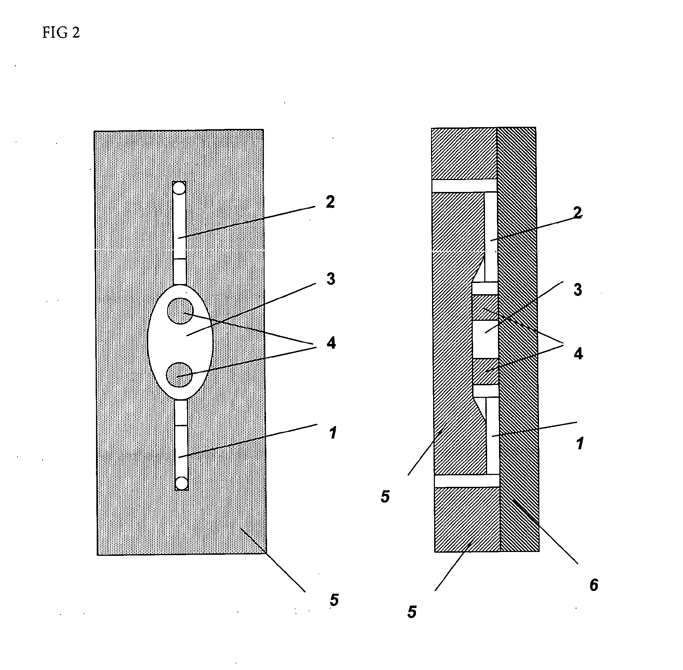

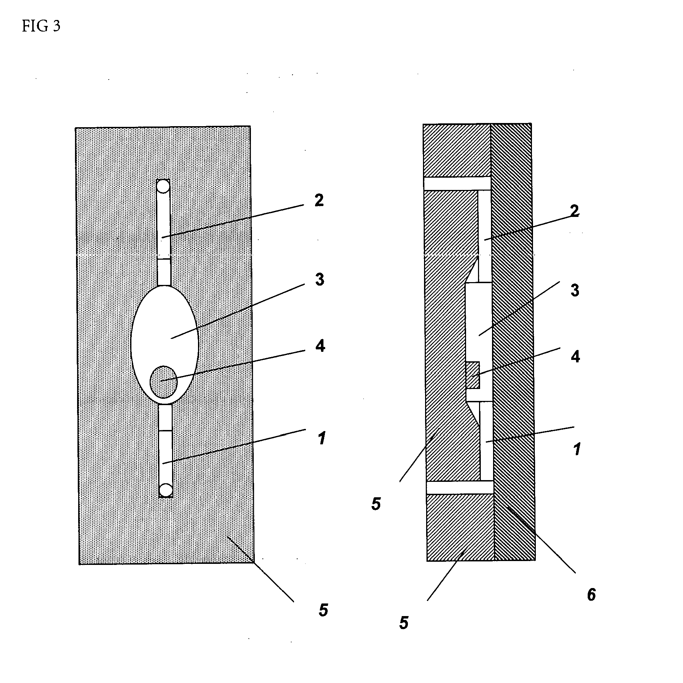

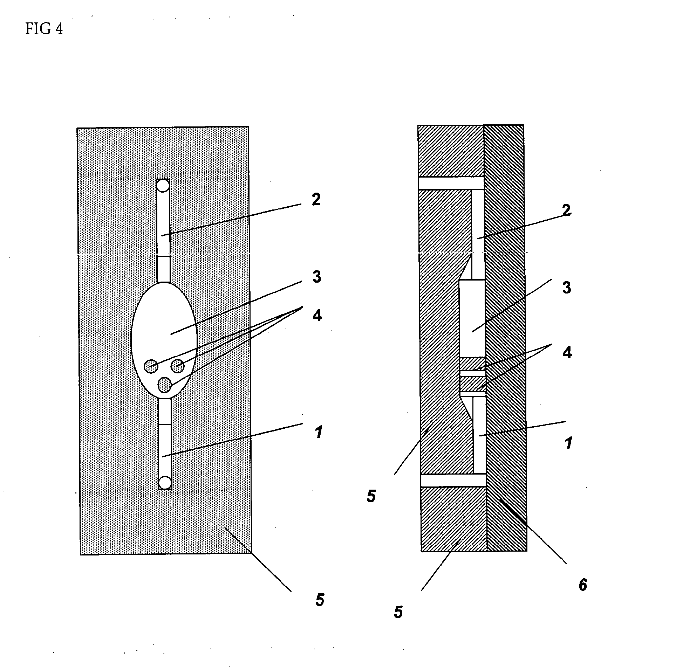

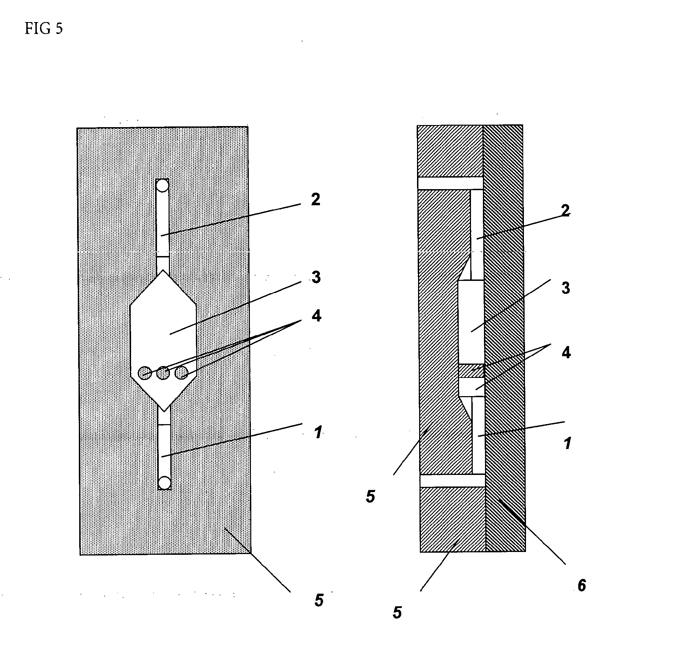

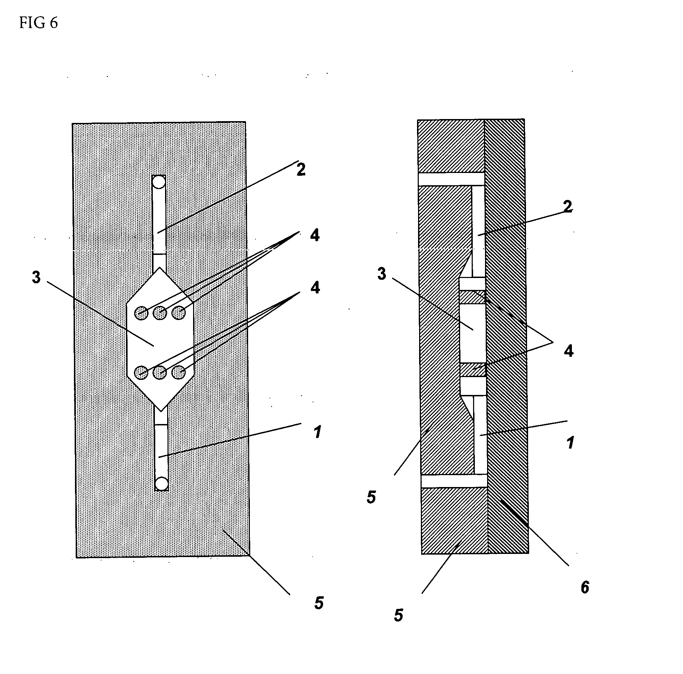

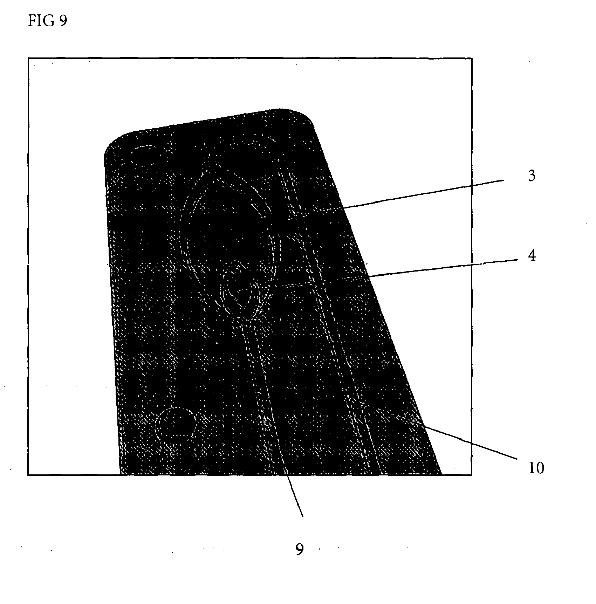

In FIG. 1 to 9 several embodiments of the device according to the present invention are shown.

In FIG. 1 there is shown a first preferred embodiment is shown in FIG. 1. On the left hand side, the device is shown in a view cut in a plain made up by the length (y) and the width (x) of the chamber of the device, the flow through direction (s) is indicated as well. On the right hand side the device is shown in a view cut in a plain made up by the length and the height or depth (z) of the chamber of the device. The body (5) of the device contains an input channel (1), a chamber (3) and an output channel (2). The chamber contains a protrusion (4) in the vicinity of the inlet port of the chamber. The protrusion completely spans the distance between the first and the second wall. On the position where the protrusion in the second wall touches the first wall, the body touches the sealing wall (6).

In FIG. 2 there is shown an embodiment having two protrusions, one being in the vicinity of the inlet port and the other being located in the vicinity of the outlet port.

In FIG. 3 there is shown an embodiment wherein the protrusion does not span the full distance between the first and second wall.

In FIG. 4 there is shown an embodiment comprising 3 protrusions arranged in symmetry relatively to an axis between the inlet port and the outlet port.

In FIG. 5 there is shown an embodiment wherein the chamber has a hexagon form, and wherein the protrusions are arranged in a line perpendicular to the connection between the inlet and the outlet port of the chamber.

In FIG. 6 there is shown an embodiment wherein two rows of three protrusions are arranged perpendicular to the connection between the inlet and outlet port, one being nearer to the inlet port, the other being more in the vicinity to the outlet port of the chamber.

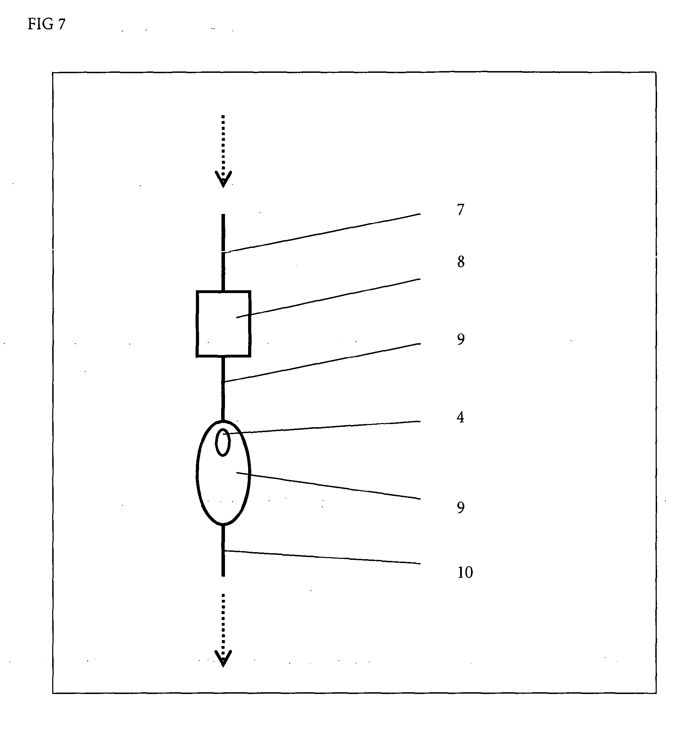

In FIG. 7 there is shown a scheme of a device according to the invention including a first channel (7) leading from an input port of the device to a first chamber (8) containing a solid matrix for immobilization of analyte, e.g. nucleic acids, a second channel (1) leading from the first chamber to a chamber according to the invention (3), and a channel (2) leading from the chamber according to the invention to an output port. The process according to the invention using this device includes introducing a sample through the first channel (7). By pumping the sample or fluid containing the sample, the fluid flows through the serially connected elements of input channel (7), first chamber (8), input channel (19, chamber according to in the invention (3) and finally to the output channel (3).

In FIG. 8 there is shown an embodiment of the body (5) of device, an input channel (7), a first chamber for sample preparation (8), a first channel (1), a chamber according to the invention (3) with a protrusion (4), and an outlet channel (2).

In FIG. 9 there is shown the body (5) of device of FIG 8 in more detail regarding the chamber according to the invention.

### Detailed description of the invention

The device of the present invention is useful for being provided a fluid and maintaining said fluid for thermally treating said fluid and monitoring a property of said fluid.

For receiving and maintaining the fluid, the device has a body, which further contains one or more chambers, which temporarily or continuously receive or/and maintain the fluid or any fluids derived there from.

A fluid that can be received, held or delivered in the device according to the present invention can be any fluid that is of interest to be subject to a particular treatment. Preferably, the fluid is a liquid. More preferable, the liquid is an aqueous solution. In the preferred use of the device according to the invention, components of the liquid or compounds derived there from are intended to be analyzed. In a diagnostic device, the liquid contains components to be determined in an analysis, e.g. nucleic acids or antigens. Such liquids may be selected from the group of environmental liquids, like water from a river or liquids extracted from soil, food fluids, like a juice or an extract from a plant or fruit, or a fluid received from a human or animal body, like blood, urine, cerebrospinal fluid or lymphatic fluid, or liquid derived there from, like serum or plasma, or liquids containing components isolated from the before mentioned liquids, like liquids containing purified antibodies or nucleic acids. The liquid may further contain additional components useful for the analysis of components of the liquid or reagents for chemical reactions to be performed within the device. Those reagents can comprise labelled binding partners, for instance labelled oligonucleotide probes, antigens, antibodies or dyes. Such reagents are generally known to those skilled in the art.

The chamber in the device according to the invention is designed to allow the performance of at least two functions within its space. Said functions can be performed in consecutive or simultaneous manner, just as needed for the method. The first function is the function to thermally treat the fluid. Thermally treating the fluid is preferably selected from heating said fluid, i.e., introducing heat into the fluid, and cooling said fluid, i.e., removing heat from the fluid, and combinations thereof. This may also include maintaining a temperature of said fluid.

The thermal treatment may be performed through any wall of the chamber of said device. Preferably, the heating is done through the first wall. Generally, methods known in the art are available to thermally treat fluids in a chamber. Preferred embodiments will be described below in the section describing the use of the device.

The second function is monitoring a property of the contents of the chamber, i.e., the fluid, during the process performed in the device. Said monitoring a property of the fluid may be performed through the second wall. The requirements of the monitoring process determine the characteristics of the second wall. For instance, determining light emanating from the fluid using a detector unit located outside the device in an instrument requires transparency of the second wall for light emanating from the chamber. In this case, the material of the second wall will be a material transparent for this light. If said monitoring in addition requires impinging light onto the fluid contained in said chamber through said second wall, the material of the second wall should be transparent for the impinging light.

The form and size of the overall device according to the invention is mainly determined by the function to be served by the device. Furthermore, the kind and amount of the fluid in said device and the kind and number of steps to be performed is determining the geometric and functional characteristics of the device.

In order to perform the basic steps of thermally treating the fluid and monitoring a property of said fluid, the device just needs to have a chamber to contain the fluid to be treated. Thus, taken a preferred size of the chamber of between 0.01 µl and 1 ml. Preferably, the device has a substantially flat design, i.e., in its main part it may have a thickness of less than 50 mm, preferably of between 0.2 and 5 mm, and a length and width of less than 100 mm, preferably of between 0.5 and 20 mm.

The device contains at least one chamber as defined above. This chamber has the function to receive and keep the fluid during the performance of the steps to be performed in said chamber. Thus, preferably the volume of said chamber is sufficiently large to receive and keep the amount of fluid needed to perform the intended steps. However, preferably, the volume of the chamber is smaller than the volume of fluid available.

A chamber for combined amplification and detection performing the polymerase chain reaction (PCR) according to EP 0 543 942 may have a volume of between 0.1 and 500 µl.

The device has two functional walls, a first and a second wall, being opposite to each other. The first and second walls have their largest extensions in the direction of the length and the width. The first and second walls are spaced apart by the dimension depth, the depth being perpendicular to the plane of length and width. The first and second walls can be planar over the total extension of these walls or can be bent or concave. The average depth of the chamber is typically in a range of 0.1 to 3 mm depending on the volume addressed. Preferably to allow fast heat exchange the cell is as thin as possible, while still to getting to large in the direction of length and width, to avoid to large footprint of the device. For reasons of detection of a property within the chamber, e.g. for the detection of fluorescence, a not to thin cell is preferred. The final shape of the cell (in respect to length and width) is therefore taking into account the thermal, optical and space requirements, and requirements of the assay e.g. sample volume to be processed.

The shape of the protrusion can be rather various. Its main function is to avoid fluid pass on the shortest way. Therefore, the protrusion has (in the direction of the chamber) a depth of 50 to 100% of the chamber depth. The protrusion has a width of 1 to 80% of the chamber width, therefore typically being in a range of 0.2 and 4 mm. The length of the protrusion is between 0.2 and 6 mm. The protrusion sidewalls may be substantially perpendicular to the length width plane or may have a slight deviation up to 45° to the plane of length and width. The walls especially in the corner may be rounded, which is preferred to avoid carry-over of fluid within such corners. Preferably, the protrusion is made out of the same material as the body (5) and is inherent to a body forming the chamber and the second wall of the chamber. Therefore, the protrusion is protruding out of the second wall of the chamber.

Preferably, the first wall has good heat transfer properties to allow good heat exchange to the fluid made from a heat conducting material, such as a polyester or polyalkylene, e.g., polypropylene, or a composite material containing this thermoplastic material and a metal foil. Usually, one of the two walls, e.g., the first wall, of the chamber of the device according to the invention is a thin sealing foil. Most preferred, the first wall is a composite of aluminum foil and a polypropylene layer.

In case the first wall has protrusions or grooves, those are designed such that they do not entrap gaseous bubbles. Grooves, therefore, are not preferred. Protrusions may reach from the first wall towards the second wall. Again, they are designed to not comprise acute angles at their connection to the surface, as those may lead to trap gas bubbles and create carry over. Most preferred, the first wall does not contain protrusions or grooves. This also makes manufacturing easier, particularly, in case of the first wall being a foil.

The second wall preferably is made from a thermoplastic material. More preferred, the thermoplastic material is selected from the group consisting of polypropylene, polyethylene, polystyrene, polycarbonate and polymethylmethacrylate. Most preferred, one of the two walls, e.g., the second wall is a light transparent wall as described above or contains a transparent part, e.g. a transparent optical window, to allow monitoring of the properties of the fluid and any changes thereof.

The second extended wall is disposed opposite to said first wall. The average perpendicular distance between the first and second wall, that means the average depth between both walls is 0.2 and 5 mm, preferably between 0.2 and 2 mm, most preferred of between 0.5 and 1 mm.

The core feature of the present invention is that at least one of said first and second wall comprises at least one protrusion diminishing the distance between said first and second wall to a distance of from 0 to 80 % of the maximum distance between the first and second wall, preferably between 0 and 50 % and most preferred 0 %. This protrusion covers between 1 and 30%, more preferred between 5 and 15% and most preferred between 10 and 15 % of the second wall. The protrusion, usually having a width in the range of 0.2 and 4 mm and a length in the range of 0.2 and 6 mm, further is located at a position on the surface of one of the two walls.

The location of the protrusion creates new fluid paths within the chamber with a width of 0.3 and 3 times, more preferred 0.5 to 2, most preferred 0.75 to 1.5 times the depth of the chamber. Preferably, the protrusion does not touch any of the third and fourth walls, the side walls of the chamber. This leads to fluid paths divided to circumvent the protrusion(s) between the inlet and the outlet port of the chamber.

The chamber can comprise between 1 and n protrusions, wherein n is a number of 2, 3, 4, 5, 6, and so on as far as approximately 100. Preferably, there are between 1 and 50 protrusions in each chamber. The space between two protrusions located adjacent to each other (shortest distance measured between two neighboring protrusion's projections in the length width plane) is of 0.3 and 3 times, more preferred 0.5 to 2 times, most preferred 0.75 to 1.5 times the depth of the chamber.

The protrusions may have identical shape or may be shaped differently. Preferred they have identical shape. The chamber and the protrusion are preferably symmetrical to symmetry plane, the symmetry plane being virtually along the center inlet-outlet port and being perpendicular to the length-width plane. Any protrusions are preferably distributed on locations on the second wall symmetric regarding the connection between the inlet port and the outlet port of said chamber.

The protrusion(s) are usually located in the expanding or the squeezing section of the chamber. Preferably, one or more protrusions are located in the vicinity of the inlet port rather than to the outlet port. This allows retaining a homogenous area without protrusion, available for the monitoring process, in the middle of the chamber. However, the invention also covers additional protrusions in the vicinity of the outlet port.

The protrusion(s) according to the invention surprisingly lead to improved accuracy of detection even for small amounts of fluid, where active mixing in the chamber is difficult. Furthermore, it leads to more homogeneous filling of the chamber and thus more homogeneous conditions for thermal treatment and monitoring. Furthermore, the protrusion(s) according to the invention lead to significant carry-over reduction. According to the present invention carry-over means the contamination of a current process step, e.g., caused by subject-matters or ingredients present in prior process steps. Such carry-over events are in many cases disturbing, because they may lead to inhibition of the current reaction or may limit the following reaction(s), and may even lead to false positive or false negative results.

Means for analysis reactions resulting in no or substantially no carry-over events having no acceptable influence are, therefore, of high value (something to target). Carry-over events can generally be avoided by simplifying designs (e.g., no valve are required, e.g., for switching fluids), reduction of reagent demands (e.g., the reduction of washing buffer), reduction of process steps (e.g., no or less washing steps) and reduction of time (e.g., for caring out carry-over reduction processes steps).

Especially in processes where subsequent fluids are passed through the chamber in a complex process (e.g. a nucleic acid analysis), and where following processes are sensitive to carry-over of fluid from a former process step, a device according to the instant invention is very helpful to reduce sample volume, device size, the number of reagents and process steps and/or time for carrying out the process steps.

Furthermore, the design of the chamber allows fast heat-transfer as well as observation of an optical property and bubble free filling.

In particular preferred according to the inventions are flat chambers of a thickness (distance between the first and second wall) of between 50 and 2000 µm, a width of maximal 30 mm, and a length within the range of 50 µm to 50 mm, wherein the inlet and the outlet ports are located at the opposite ends of the length of said chamber.

Further preferred according to the invention are chambers each comprising at least one detection area with a minimum detection area of 0.01 mm² to maximal 20 mm², having preferably a circular or rectangular shape. Accordingly, accuracy of detection is improved, as averaging and summation of optical signals during detection is possible more easily, even in case of inhomogeneity within the fluid in the chamber. Such inhomogeneities may occur in small volumes of liquid, particularly, if the fluid is the result of an earlier desorption step, such as in a prior purification on a solid phase.

The material of the third and fourth and any further walls will also be chosen according to additional needs or functions of said other walls.

Preferably, the second, third and fourth walls are made from the same material and in a single piece. This part of the device is called the body of the device in the following. Conveniently, the body of the device is formed from at least one relatively rigid polymer. Polymers for the body according to the present invention are preferably selected from the group of thermoplastic material, for example, polypropylene, polyethylene, polystyrene, polycarbonate and polymethylmethacrylate. Further preferred, the body is made of a material, which can be liquefied by heating above its melting temperature, and which in molten state can be introduced into a mold to reflect the particular form the body or a part thereof is intended to assume. In this case, three of the four walls of the chamber can be prepared in a single molding process. The method of manufacturing is described below in more detail.

Besides the reaction chamber according to the invention, the device may contain other cavities, for instance in the form of channels and other chambers. The use of channels can be various, e.g.,
- delivery of fluid between two locations within the device (e.g. chambers),
- delivery of fluid in or out of the device,
- measuring fluid,
- processing a fluid or processing matter being solved or suspended in the fluid.

The use of the other chambers can be various, e.g.
- storing, receiving, delivering fluid,
- processing a fluid, e.g., for analysis of matter in the fluid, or
- retaining and delivering components of the fluid and other fluids, such as reagents.

More preferred the device comprises at least two channels, a first leading to the inlet port of the chamber, and second leading away from the outlet port of the chamber. The first channel preferably leads from an input location of the device or an outlet port of a first chamber into the chamber according to the invention and the second channel preferably leads from the chamber according to the invention to an outlet port of another chamber or to the output location of the device. If more than one chamber are provided in the body, there may be more channels, e.g., connecting the chambers in the body. Optionally, chambers and channels are arranged such that any liquid introduced through an inlet channel into said chamber will fill said chamber prior to leaving the chamber through an outlet channel. One or more of the additional chambers may contain inserted materials, so called "solid phases", which may be used for adsorption and/or reactions on the surface. In one preferred embodiment the body device comprises a preparation chamber (binding or capturing chamber) connected through the inlet channel upstream of the protrusion containing chamber. The protrusion containing chamber according to the invention will preferably not contain any porous material, such as fleece.

Most preferred for nucleic acid analysis the protrusion containing chamber (3, 4) is fluidically connected to a second, e.g., a capturing chamber (8). The second chamber has the function being selectively and sensitively enough to adsorb, e.g., a target nucleic acid.

The second, e.g., capturing chamber (8) harbors on one side the solid phase and on the other side provides fluidic connections for processing the process fluids through the solid phase.

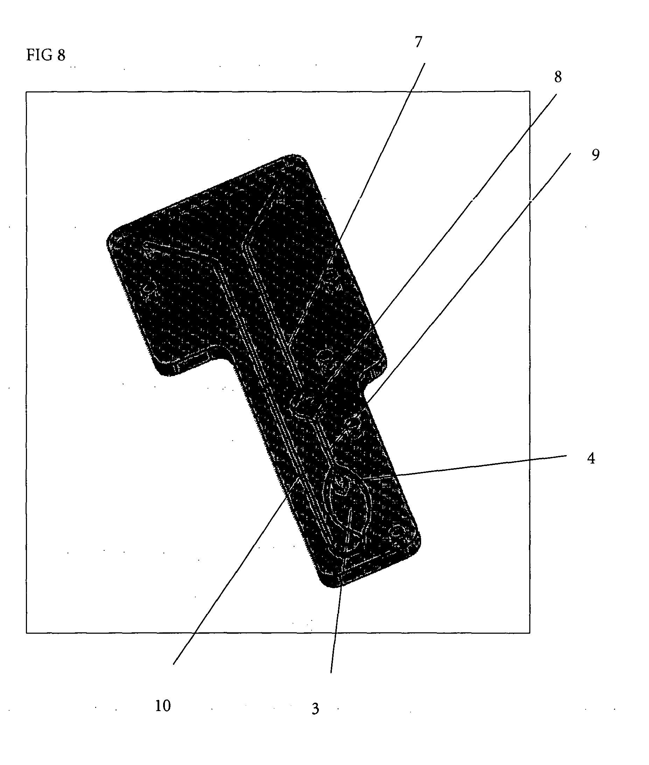

Figures 7 and 8, e.g., show that channel 7, an input channel, is connected with the capturing chamber (8) to allow the fluid to go in and channel (1), an outlet channel, for allowing the fluidic material to leave the capturing chamber (8). The solid phase is placed within the fluid path, forcing the fluid to flow through solid phase interior volume (e.g., through the fleece).

The capturing or binding chamber (8) generally has an inlet and an outlet port and the solid phase is located in between. Said chamber (8) can have various shapes, e.g., a cylindrical shape with a diameter 1 to 20 mm, more preferred 2 to 12 mm, and a height of 0.1 to 10 mm, most preferred in a range 1 to 5 mm. A volume range from approximately 5 ul to 500 ul is preferred, most preferred is a range of 10 ul to 200 ul. The capturing chamber is designed to have neither fluidic short cuts, nor sections where no fluid is flowing, ideally all fluid paths have equal length or all flow-through times over all fluid paths are equal.

For the analyte isolation and purification the capturing chamber harbors a so called "solid phase".

The solid phase is a piece of material with selected material properties. A key material property is the ability to be used for the purification process of the nucleic acids from the matrix. The material must be able to adsorb and desorb or bind and release, respectively, nucleic acids under particular conditions. By switching conditions the nucleic acids are either selectively adsorbed or bound respectively by changing the conditions the nucleic acids are desorbed or released.

A commonly used and known system uses as solid phase a glass surface. Adsorption of the nucleic acid occurs, when the nucleic acid are brought in contact to the solid phase, while the nucleic acids are dissolved in a solution of high salt concentration (e.g., in 4 M Guanidinium chloride solution). For desorption the nucleic acids bound on the solid phase are brought in contact with an elution buffer of low salt content. The selection of the solid phase, the binding and elution conditions are broadly described in the prior art.

The amount of solid phase used in a disposable is defined by the specific binding capacity of a selected solid phase (14fold of the material and the required binding capacity are, e.g., be suitable).

As example a glass fiber fleece made of fibers from CAS 65997-17-3, with a weight of 50 800 g/m2 and an uncompressed thickness of 100 um to 10 mm may be used. Most preferred 100 to 400 g/m2 and a thickness of most preferred 200 um to 5 mm is used. Preferred a diameter of 1 to 20 mm, most preferred a diameter 3 to 12mm is used. Other material may, however, also be used, e.g., sintered solid phases.

For desorption, also detection reagents may be used (e.g., a "PCR-Mastermix") as long the detection reagents full-fill also the side condition, that the nucleic acids desorb (means mainly, that the detection reagents must have a low salt concentration (<<1M) and be mainly aqueous (> 50% water). The direct elution with the detection reagents further simplifies the process.

In order to introduce fluid into or/and remove fluid from the device and the chamber, the device according to the present invention has more than one fluid port, at least one input location and one output location. In a very preferred embodiment, the body as defined above comprises the fluid ports. Furthermore, the body comprises the grooves or/and channels. The body preferably is rigid to provide the stiffness to the device to maintain the shape of the chamber throughout the process of manufacture and use of the device.

In another embodiment, electrodes can be incorporated into the body or the sealing wall. Electrodes can be used to determine the electrochemical status of fluids contained in the device or to start electrochemical reactions within the device. In this case, the device will have appropriate connectivity to electrical circuits.

In a preferable embodiment, the device is a micro fluidic device. Micro fluidic devices according to the instant invention have one or more channels with a cross section of more than 0.1 µm², more preferable between 10 µm² to 10 mm². This cross section may preferably be rectangular, but may also be rectangular with rounded corners. Rounded corners are more difficult to produce, particularly in the vicinity to the sealing wall, but are preferred in view of their avoiding retaining bubbles in corners of the cross section. Micro fluidic devices may furthermore or alternatively comprise one or more chambers having a larger cross section larger than the channels. The chamber of a micro fluidic device may have a volume of between 10 nl and 3 ml, more preferable between 1 µl and 0.5 ml.

In one embodiment, the device already contains reagents useful for the analysis, and the sample is introduced through the fluid port. In another embodiment, the device contains a sensor which is useful for determining a property of the sample or the liquid derived there from, using or not using reagents.

The final device is preferably a composite of several elements. This means it consists of two or more parts manufactured separately and assembled subsequently, at least one part of the device consisting of a rigid body including the protrusion prepared by injection molding.

Thus, a further subject of the present invention is a method for manufacturing the device according to the invention comprising
- a molding step including
   a) providing a first mold reflecting a shape of a part of said chamber regarding said second wall, said third and fourth wall and said protrusion,
   b) injecting into said mold a thermoplastic material in liquefied form,
   c) waiting until said first material has become at least partially solid,
- removing the result of said molding step from said mold,
- sealing said part of said chamber by a sealing foil to provide said first wall.

The two parts - body and sealing wall- can be joined by known methods. In the preferred embodiment, wherein the sealing wall is a thin layer comprising a thermoplastic polymer and the rigid body is made of polymer, e.g., polystyrene, the two parts can be combined and then sealed by welding, for example LASER welding, ultrasound welding, thermo sealing or gluing. The two parts can also only be clamped or stick together.

The joining method, the material of body and the material of the sealing wall have to be selected to fit together. For example, if the joining method is Laser welding, then the bulk material of the body and the sealing wall are of the same material (e.g. polypropylene) but one of the two materials is stained to have absorption for the laser energy. If the joining method is ultrasound welding both materials are typically the same. If the joining method is thermo sealing the sealing wall is a thermo sealable foil adapted to thermally seal to the body. Such thermo sealable foils are generally composites of several materials, wherein the layer opposed to the sealing is able to seal to the body. A typical foil suitable to be joined to a polypropylene body has composite layers of aluminum or polyester and polypropylene. Such sealing foils are known and are commercial available. In the case where, the sealing wall is a foil, the foil preferably is between 20 and 1000 µm thick, more preferably between 50 and 250 µm.

In the above method for manufacturing, further assembly steps can be added, particularly, if the device contains additional elements.

Another subject of the present invention is a system for thermally treating a fluid and for monitoring properties of said fluid, comprising
- a device according to the invention,
- an instrument for thermally treating the fluid and for monitoring properties of the fluid comprising
   - a heater located adjacent to said first wall, and
   - a property monitor unit optically connected to said second wall.

Instruments for analysis of a fluid are generally known. They include units as generally known for analyses. Preferred units are optics for determining properties, for instance optical properties, or changes in properties of the fluid contained in the device, mechanics to move the fluid from a first position to one or more other positions, and liquid handling modules for dispensing or/and aspirating fluids from tubes, vessels or reagent containers into the device. The instrument according to the invention preferably comprises a rigid fluid actuator, which is used to dispense fluid into the device according to the invention or/and remove liquid from the device. The function of dispense or deliver and remove or receive fluid to and from the device is according to the invention to be considered both as active and passive handling. For example, receiving a fluid from a first rigid actuator can be made by either applying the fluid under pressure to the device to press the fluid into the device or by applying negative pressure to the cavity so as to suck fluid into the device and removing or delivering fluid from the device to the outside can be achieved by either applying pressure to the cavity, e.g., by pumping a fluid, such as a liquid or a gas through a first fluid port, or applying negative pressure to the cavity so as to suck the fluid through an fluid port. Appropriate means include syringe pumps. The rigid fluid actuator(s) is situated in the instrument such that it can act on any input and output location when the device is put into a defined position on the instrument. The fluid actuator position relatively to the device may be controlled by an automatic system.

The instrument further contains a heater, preferably a heating or/and cooling element. This element is positioned such that it contacts or can contact the device at the outside of the first wall, preferably when the fluid is contained in the cavity within the device, such that a heat transfer to and from the heater or/and cooler to and from the first wall is possible. An example of an instrument comprising a heating or/and cooling element is a thermocycler. Thermocyclers are generally known to apply a profile of different temperatures in repeated manner to a fluid. An exemplary thermocycler is described in EP 0 236 069. Preferred heating or/and cooling elements are selected from the group consisting of a Peltier element, a resistance heating element and a passive cooling element, such as a metal block equipped with a fan.

In order to perform monitoring of properties or change of properties of the liquid during processes performed in the device, the instrument further comprises a property monitor unit optically connected to said second wall, e.g., detection module. Appropriate detection modules are generally known and depend upon the kind of property or property change performed during the presence of the liquid in the device. For example, if the property is a change in an optical signal, for example a fluorescent signal, the detection module will comprise a light source positioned in the instrument such that the device, preferably a chamber in that device, can be irradiated, and an irradiation receiving unit, preferably a light sensitive cell for receiving irradiation from the liquid contained in the device and transmitting an electrical signal to an evaluation unit. The detection module is located in the instrument where it can detect light emanating from the fluid contained in the chamber. Preferably, there is also an irradiation module located to impinge light into the chamber; this light preferably has characteristics to either excite a component in the fluid, either to be absorbed or to be altered.

If the process to be performed in the device requires connectivity of components of the device, such as electrodes or heating foils in the device to an electric circuit of the instrument, such connectors are preferably provided on the instruments on positions that are located such that the connectors on the instrument are connected to their counterparts on the device, when the device is inserted into the instrument.

Preferably, the system according to the invention comprises in addition a fluid container (e.g., for waste collection) or/and one or more reagent containers.

A further subject of the invention is the use of a device according to the invention in a method for analysis of a sample.

Therefore, another subject of the invention is a method for analyzing a fluid or components thereof comprising
- providing a device according to the invention or a system according to the invention,
- introducing said fluid sample directly or through a preparation chamber into the chamber of said device, and
- thermally treating said fluid in the chamber of said device,
- monitoring a property of said fluid in the chamber of said device, and
- using a change of said property for the analysis of said fluid or components thereof.

The fluid, preferably a sample to be analyzed or/and reagents, is preferably introduced into the device by a rigid fluid actuator such as a steel cannula through a first fluid port into a channel leading directly to the inlet port of the chamber according to the invention. The fluid sample may, alternatively, be introduced into the chamber via a second chamber, a preparation chamber, e.g., comprising a porous material from which components of the fluid sample are eluted and subsequently transferred through another part of the inlet channel into the protrusion containing chamber. The protrusion containing chamber further contains at its end opposite to the inlet port of the first channel an outlet port for a second channel, said second channel leading to another fluid port, the output location. While applying pressure to the liquid in the cannula to enter the channel, a second cannula is present introduced into said output port such that the pressure can escape through that second cannula. In the basic embodiment of the invention, the fluid to be analyzed is a liquid containing the analyte, e.g., a nucleic acid to be determined, as well as reagents needed for detection, e.g., for amplification and detection, of the component of the fluid to be detected, such as a labeled binding partner for the component to be determined in the fluid. The liquid is proceeded into the cavity by applying pressure through the first cannula or by applying negative pressure to the second cannula. Detection can start in the chamber, when the reaction has proceeded as required. This can be made by irradiating the liquid in the cavity with light of a wavelength at which one of the components or reagents in the fluid has a measurable absorption. Determination of light leaving the cavity, for example by fluorescence, can be used to determine the absorbance of the liquid or any changes in absorbance of the liquid over time or compared to a standard liquid.

In a very preferred embodiment of this method of analysis, the component of the liquid to be analyzed is a nucleic acid suspected to be contained in the fluid, for example parts of the genome of hepatitis C virus. The reagents for analysis will then contain reagents, e.g., primers, for the amplification of a particular fragment of said nucleic acid and a probe for binding to the amplified fragment. A very preferred embodiment of such reaction is discribed in EP 0 543 942. In order to apply thermal cycles to the fluid contained in the chamber, the instrument used contains a combined heating/cooling block to bring the content of the chamber to the temperature in a profile as needed to amplify the nucleic acids. The change in absorbance or fluorescence in the fluid is then used as a measure of the nucleic acid to be determined in the fluid.

An advantage of the device according to the present invention is that the chamber can be better cleared from fluid by blowing gas through the chamber. This is important in methods where prior to the fluid to be analyzed another fluid, for instance a processing fluid from an earlier treatment step, has to pass the chamber and may contain inhibitors for reactions intended to be performed in the fluid in the chamber during the thermal treatment and monitoring procedure. This may reduce the amount of process steps for cleaning the chamber or/and may reduce the amount of reagents/washing solutions.

The first sealing wall forms together with the body (5) as shown in Figures 1 to 6 (and optional other parts being present in the total device together with inserted parts as septa, fleece and vents) an assembly of the device. The first wall is joined to the body (5) in a manner that the resulting connection is fluidic tight. The open space formed between the body (5) and the first wall forms channels (1, 2) and chambers (3). The joining techniques used to assemble the first wall (6) to the body (5) are commonly known. Typical and preferred joining techniques are laser welding, ultrasound joining, thermal bonding or sealing, and gluing.

The first wall is generally a flat, sheet like material, or a thin layered body. The thickness of this element is typically in a range of 0.01 mm to 1 mm, most preferred in a range of 0.04 mm to 0.35 mm. The overall heat transfer rate of the first wall is typically greater than 200 W/m2/K, more preferred greater than 2.000 W/m2/K. According to preferred embodiments the first wall is a sealing foil, particularly a polymer foil, a metallic foil or a composite foil comprising a metal sheet and a polymer sheet.

### Reference numerals:

- 1: Input or inlet channel
- 2: Output channel
- 3: Reaction chamber (protrusion containing chamber)
- 4: Protrusion (Detection cell)
- 5: Body
- 6: Sealing wall
- 7: Input channel from input port to first chamber
- 8: Binding or capturing chamber (preparation chamber)
- 9: Chamber inlet port
- 10: Chamber outlet port
- 20: Device inlet
- 21: Device outlet
- 100: Device

Example for performing an analysis according to invention with the device according to the invention:
A device (100) with a embodiment as shown in Fig. 8 was used.
Geometries of the device is as follows: Diameter of chamber (8): 5 mm; depth of chamber (8): 1 mm.
A glass fiber-fleece with a weight of approx. 220g/m² and a diameter of 5.15 mm (Typ Highpure Roche ®) was inserted into chamber (8). The respective channels having a width and depth of 600 µm. The detection cell used having a length of 15 mm, a width of 6 mm and a depth of 0.6 mm. The protrusion is 3 mm in length and 1.5 mm in width and located 1 mm away from the inlet port. The device was made out of polypropylene (PP) and was sealed by a heat transfer wall consisting out of 30 um PP and 110 µm Aluminum.

### Reagents used:

Sample: At least 1 ml sample (EDTA plasma) is provided in a tube, identified by a barcode. For control reasons or performance studies the sample can get spiked with HBV viruses provided, e.g., from the company Acrometrix/USA (e.g., 1 ml sample spiked with 10.000 copies of HBV virus).

### Reagents:

1) Lysisbuffer

| | |
|---|---|
| 5.5 Mol | Guanidinium-rhodanid |
| 0.04 Mol | TRIS pH 7.4 |
| 9 g | Triton X100 |
| 0.02 Mol | 1,4-Dimercapto-2,3-butandiol (DTT), threo- |
| 14 mg | polyA (Amersham Sciences/UK) |
| 1.000 L | Lysisbuffer (completed with water) |

2) Washing buffer

| | |
|---|---|
| 200 g | Water |
| 10 mg | polyA (Amersham Sciences/UK) |
| 0.16 g | Triton X100 |
| 0.66 mMol | TRIS pH 7.5 |
| 570 g | Ethanol |
| 30 g | Isopropanol |
| approx 1.0 L | Washing buffer |

3) Proteinase
The enzyme is commercially available from various companies, e.g., Roche Diagnostics: PCR grade quality, approx. 600 U/ml.
Reagent used from the Roche Diagnostics Taqman® HBV Kit
4) QS (Quantitation Standard)
Reagent used from the Roche Diagnostics Taqman® HBV Kit
5) Elution buffer

| | |
|---|---|
| 50 mg | Dodecyl-beta-maltoside (Fluka, PN 44205) |
| 3.3 mMol | TRIS pH 7.5 |
| 5 mg | polyA (Amersham Sciences) |
| 1.000 L | Elution buffer (completed with water) |

Mastermix A (Mn)
Reagent used from the Roche Diagnostics Taqman® HBV Kit
Mastermix B
Reagent used from the Roche Diagnostics Taqman® HBV Kit
Combined Elution Mastermix ("EMMx")
Mixed prior to use

| | |
|---|---|
| 0.5 ml | Elution buffer |
| 0.15 ml | Mastermix A (Mn) |
| 0.35 ml | Mastermix B |
| 1 ml | EMMx |

### Lysis and Preparation of the Binding solution

### Purpose:

The first step in the sample prep process is making the NA (NA=nucleic acids = analyte) ready for binding. This may include a digestion/degradation of undesired material or effects, e.g., the digestion of the protein shell of a virus by a proteinase, and/or disrupting cell-walls of a bacterium by detergents. The second purpose of this step is adapting the conditions (ambient solution of the analyte) that the analyte NA can bind to the solid phase in the following binding step (adjusting binding conditions).

### Procedure:

- 630 µl EDTA plasma from a patient or a control sample is pipetted to an empty tube (= sample to be analyzed containing the analyte). The sample can be spiked for control reasons with a HBV control (e.g,. with 10.000 copies (=10 kcp) of HBV virus, e.g., from Acrometrix/USA).
- 65 µl indentifier Pase is dosed and mixed with the sample
- 25 µl QS is dosed to the reaction mix and mixed
- The reaction mix is thermostaticed to 37°C and incubated for 300 seconds.

After this incubation 1420 µl Lysis buffer is dosed the reaction.

### Binding

### Purpose:

During the binding step the prior prepared binding solution is brought in contact or processed over a solid phase adsorber present in the chamber (8) able to bind sufficient selective and sufficient quantitative the NA. Inhibiting compounds present in the binding solution are either not bound or bound in negligible amounts or bound compounds are eliminated in later wash step(s).

### General procedure:

- As solid phase in binding chamber (8) serves a glass fleece harbored.
- The binding chamber (8) is designed to have an inlet and an outlet and to process the fluid through the solid phase.
- Principally, all known fluid transport mechanisms are useable to process the binding solution through the binding chamber (8). Examples of such fluid transport mechanisms are:
   - Direct pumping e.g, by a piston pressing the binding solution through the binding chamber (8).
   - Pumping using the hydrostatic pressure caused by gravity force. Pumping using hydrostatic pressure caused by centrifugal force.
   - Applying a differential pressure by applying a gas pressure on one side and/or vacuum on the other side of the system.

### Detailed procedure:

- The binding solution is pumped through the device using a pressure source of+1bar. The binding solution is processed from a point (21) to a point (20).
- The binding chamber (8) harbors as solid phase a disk of 5 mm diameter of a glass fiber fleece (220g/m², quality as used in the "HighPure"-products of Roche Diagnostics GmbH).The binding chamber has a diameter of approx 5 mm and a height of 1 mm. The channels (7, 1, 2) leading to/from the binding chamber (8) and chamber according to the invention (3) have a maximal width of 0.6 mm and height of 0.6 mm.
- The binding solution flows after the binding chamber through the amplification and detection chamber (3, 4) to the waste.
- A typical binding time is in range of 2 minutes.
- The processed binding solution pumped through the device was discharged.

### Washing procedure

### Purpose:

Residues of binding solution present in the inter-space of the solid phase absorber and material absorbed to the solid phase but being dissolvable from the solid phase in the washing buffer is removed, and walls of the integrated disposable being contaminated by the binding solution are washed in this step.

### General procedure:

- The washing buffer is aspirated from the reaction chamber containing the washing buffer and pumped through the integrated disposable which has to be washed. For processing the washing buffer the reagent pipetting system having the elements reagents pipetting tip and reagents dosing fluid system and a reagents pipetting tip wash station is used. The washing buffer for washing the system that has to be processed to a fluid port B having a fluidic connection B leading to the binding chamber respectively having a fluidic connection to the complete fluid system on the integrated disposable (100) that has to be washed.
- Where required several wash steps with the same or with various washing buffers can get carried out.
- The washing step can get carried out under thermal control due to the connection of the integrated device to a thermal control system.

### Detailed procedure:

- 600 µl washing buffer are aspirated from the corresponding reagents container. To the port (21), 500 µl washing buffer are then dosed at a flow rate of 1800 µl/min through the device. The washing buffer leaves the system at the port (20).

### Washing removal / Drying

### Purpose:

This process step applies to arrangements of integrated devices and reagents where the washing buffer has an inhibiting effect to the following process steps (mainly to the step of NA-detection). In these cases the washing buffer in the integrated disposable has to get removed or reduced below a critical level.

The following principles alone or in combination are used for the washing buffer removal.
- Fluid mechanical displacement (e.g. by gas, e.g., air or by another neutral fluid).
- Drying off evaporable elements of the washing buffer which are know to inhibit the following process steps by means of heating and/or simultaneous pumping a gas through the section of the integrated disposable (100), wherefrom washing buffer has to be removed.
- Chemical neutralization by processing a solution through the integrated disposable able to neutralize the inhibiting potential of a washing buffer.

### General procedure:

- For fluid mechanical displacement and drying off evaporable elements of the washing buffer an air dosing system is used.
- To reduce the process time of drying off the evaporable compounds of washing buffer, the integrated disposable (100) is connected to a temperature control system allowing this step to be carried out at an elevated temperature.
- The air dosing system is automatically connected to a fluid port (21) accessing the binding-detection cell fluid system..
- For fluid mechanical displacement and drying of evaporable parts of the washing buffer during a predefined process time, at predefined temperature and at a predefined pressure air is pumped through the system in the integrated disposable (1) wherefrom the washing buffer has to be removed.

### Detailed procedure:

- The air dosing system generating a pressure of +1 bar connects to the fluid port (21)
- The integrated disposable (100) is thermostatized to 40°C.
- Air is dosed for 15 seconds through the device. The pressure of the air is +1 bar (above ambient pressure).
- After 15 seconds the temperature of the temperature control system is set to 50°C, and held for 20 sec.
- The air is dosed at +1, bar pressure during 120 seconds through the integrated disposable (100) wherefrom the washing buffer has to be removed, while the temperature is kept at 50°C.
- The air leaves the system at the port (20).

### Elution

### Purpose:

The NAs (selectively and quantitatively enough) adsorbed to the solid phase and washed, are eluted (= solved from the solid phase) prior to final amplification and/or detection step. For reasons of simplicity the elution is made directly with detection reagents used for the following amplification and detection step. In the following context about a combined [elution] + [PCR Mastermix] = "EMMx" used for this process is referred to.

In this process step the NAs are eluted (solved) from the solid phase in the EMMx and transferred to the amplification and detection chamber.

### General procedure:

- The EMMx is dosed through the fluid (21) to the integrated disposable (100).
- The flow path leading from fluid port (21) through the binding chamber (8), through the amplification and detection chamber (3) and finally leading the outlet port (21) of the device.
- For thermal control of this process the integrated device is connected to thermal control system.
- The elution step can contain several sub steps, where the integrated device is thermally control to a first temperature, where a first volume of EMMx is dosed to the system, where it is then incubated for a certain time and where at last a second volume is dosed.
- Typically a first volume of EMMx fills the fluidic connection (7) including the binding chamber (8) containing the solid phase and after a short incubation time, a second volume is dosed to the fluidic connection (21) transferring the eluate present in the binding chamber (8) to the amplification and detection chamber (3).

### Detailed procedure:

- The device is thermostaized by means of the thermal control system to 50°C and held there for the whole process.
- By means of the reagent pipetting system 100 ul EMMx is aspirated.
- A first volume of EMMx of 40 ul is dosed by the reagent pipetting system through the fluid port at a flow rate of 1200 ul/min. In this first step only the solid phase in the binding chamber (8) is wetted by the EMMx.
- The integrated device is incubated for 10 seconds
- A second volume of EMMx of 42 ul is dosed by the reagent pipetting system through the fluid port B at a flow rate of 750 ul/min. The EMMx present in binding chamber (8) containing the eluted NAs is transferred to the amplification and detection chamber (3).
- After this step the port (20, 21) are closed,e.g., by placing a tape on the corresponding openings of the disposable (to avoid fluid loss or evaporation during thermocycling in the next step)

### Amplification and Detection

### Purpose:

After the above described, precedent process steps the analyte/s are ready to be analyzed. To be analyzed means in this context: to be checked for the presence or absence of an analyte and/or optionally for detecting the concentration of the analyte/s.

Higher amounts of analyte, e.g., NA may be directly accessible to a method detecting the presence and optionally the concentration of the analyte.

Lower and lowest concentrations of an analyte may require a so called "analyte amplification". For the substance class of NAs there exist several such biochemical analytical methods allowing the multiplication of the target analyte molecule or derivatives there off. By means of these methods copies or copies of derivatives of the analyte are generated, which are then much easier to detect due to their higher concentration after this analyte amplification.

Examples of such analytical methods for analyte amplification are:
- Polymerase Chain Reaction (PCR): The complementary DNA is generated by means of a DNA-Polymerase (e.g. DNA-Polymerase form Thermus aquaticus) using thermal cycling.
- Reverse Transcription Polymerase Chain Reaction (RT-PCR): Starts form a target RNA analyte, where prior to PCR a reverse transcripted c-DNA is generated by a reverse transcription enzyme.
- Ligase Chain Reaction (LCR): In this case (complementary) copies of the analyte DNA are created by ligation of fragments of the analyte DNA using a DNA-Ligase enzyme.
- RNA-polymerisation: In this case multiple cDNA copies of the RNA analyte are created by multiple reverse transcriptions using a Reverse Transcription Enzyme.
- Strand displacement Amplification (SDA): Using combined polymerase chain reaction and strand displacement of prior synthesized copies. Uses beside the DNA-Polymerase-Enzyme a DNA-Nicking- Enzyme to create new start points for repeated replication steps.
- Rolling cycle amplification: Using a cyclic DNA primer or others like Ribo-SPIA®, LAMP, Helicase dependend PCR.

The use of the current principle is not limited to a distinct amplification and detection method. The amplified analyte(s) or derivative there off is either during the process of amplification or after amplification accessible to a detection method. The current invention is not limited to a distinct method of detecting the amplified NAs.

Examples of such detection methods for the amplified analyte (=amplicon) are:
- "Real-time" methods detecting the generation of amplified analyte (or derivative) during the amplification:
   - Detection of an amplicon using Taqman probes, which are specific probes being digested by the Polymerase in case of the presence of the addressed analyte forming an unquenched fluorescence.
   - Detection of a amplicon using hybridization probes, where amplicon-specific hybridization-probes hybridize to the amplicaon and thereby changes a spectroscopic property.
   - Detection of amplicon using ds-DNA interchelators (e.g. Picogreen ®), where those interchelator molecules have an affinity to the formed dsDNA amplicon and changes its spectroscopic properties in the presence of the dsDNA.
   - Detection of amplicon using a reflexion or turbidity measurement (e.g. in case of LAMP amplification where large amplicons are produced).
- Post Amplification detection methods
   - Gel electrophoresis: detecting the formed amplicon
   - Hybridization of the amplicon to immobilized probes and detecting this hybridization by appropriate means.

### Detailed procedure:

The integrated disposable (100) is transferred to a detection station containing a thermal cycler for performing the PCR reaction and fluorescence measurement means to detect the formation of the Amplicon resp.to detect the hydrolysed TaqMan® probes.

The follwing thermal cylcer program is executed:

| 1 cycle: | | |
|---|---|---|
| | *50* | *°C 120 secUNG-Step* |

| 5 cycles: | | |
|---|---|---|
| +*2.5°C*/*sec* | *95°C* | *15 sec Denaturation* |
| -*2.0°C*/*sec* | *59°C* | *50 secAnealing & fluoresecence measurement after 30 sec* |

| 45 cycles: | | |
|---|---|---|
| +*2.5°C*/*sec* | *91°C* | *15 sec Denaturation* |
| -*2.0°C*/*sec* | *52°C* | *50 secAnealing & fluoresecence measurement after 30 sec* |

The target analyte (if present) generates a fluorescence with an excitation wavelength of 485 nm (BW 20 nm) and an emission at a wavelength of 525 nm (BW 20 nm).

The QS is detected with second fluorophore having the excitation wavelength of 540 nm (BW 20 nm) and an emission wavelength of 575 nm (BW 20 nm). For a valid result the QS has to appear to certify the overall quality of the process and reagents (internal quality standard). Superior the QS can by used for quantification calculations of the analyte.

After analysis the integrated disposable (100) is discharged or unloaded or post PCR processed where required (e.g. for genotyping).

### Result Generation

### Purpose:

The measured signal in the detection steps converted to a information which is useful to the user, e.g., to a health status information (e.g. a viral load of a patient).

All crude data (e.g. fluorescence data) received from the detection means are post-processed by an automated system (computer):

The QS curve is examined to conformity. This is done by comparison of the QS curve with an expected QS curve. Alternatively derivated characteristics of the curve may be used, e.g., the amount of signal formed at the end of the analysis and the "elbow-value" (= cycle) where the fluorescence has reached a predefined relative fluorescence signal (e.g., 15% of the final fluorescence signal). A non conform QS signal may be used to detect non conform analysis.

The Target "elbow-value" is calculated. (The elbow value is generally related to the concentration).

From a corresponding calibration curve or reference data the concentration of the analyte is then calculated and reported to a user.

According to the present Example a sample containing 10 kcp HBV has been analyzed (Taqman-fluorescence generation of the target during PCR).

## Claims

1. A device for thermally treating a fluid or/and for monitoring a property of said fluid, said device comprising a reaction chamber having a length being in the range of 0.5 mm to 20 mm, a width being in range of 0.5 mm to 20 mm and a depth being in range of 0.1 mm to 2 mm, said chamber being further connected to via a port by an inlet channel for providing said chamber with said fluid and an outlet channel for removing said fluid or a gas from said chamber
wherein in the section between the minimum and maximum width of the chamber at least one protrusion having a height of 50 to 100% of the chamber depth, and a width of 1 to 80% of the chamber width is located within the chamber.

2. The device according to claim 1, wherein the width of the protrusion is within a range of 0.2 and 4 mm, the length of the protrusion is between 0.2 and 6 mm.

3. The device according to claim 1, wherein said chamber comprises a first wall and a second wall being located in opposite direction to each other.

4. The device according to claim 2, wherein the first and second walls are directly connected to each other or are connected through one or two side walls.

5. The device according to claim 2, wherein said first or second wall is light transparent.

6. The device according to claim 2, wherein said first or second wall is made from a material having a high heat transfer rate.

7. The device according to claim 2, wherein said first wall is a thin sealing foil and said second wall is light transparent.

8. The device according to any of the proceeding claims, wherein said protrusion containing chamber is a flat container and said protrusion is located closed-by to the port of the inlet channel.

9. The device according to any of claims 1 to 8 further comprising a second chamber connected through said inlet channel upstream of said reaction chamber.

10. A method for manufacturing a device according to any of claims 1 to 9 comprising
- a molding step for preparing the part of said chamber consisting of said second wall being light transparent, said third and fourth wall and said protrusion, and
- sealing said part of said chamber by a sealing foil to provide said first wall.

11. A method according to claim 10, **characterized in that** said protrusion is sealed to said first wall.

12. A system for thermally treating a fluid or/and for monitoring properties of said fluid, comprising
- a device according to any of claims 1 to 9,
- an instrument comprising either
- a heater located adjacent to said first wall, or
- a property monitor unit optically connected to said second wall,
- or both of said heater and monitor unit.

13. The system according to claim 12, further comprising a second chamber.

14. The system according to claim 12 or 13 further comprising a fluid dispensing unit.

15. Use of a device according to any of claims 1 to 9 for the analysis of a fluid sample.

16. A method of analysis of a fluid or components thereof comprising
- providing a device according to any of claims 1 to 9 or a system according to any of claims 12 to 14,
- introducing said fluid sample directly or through a preparation chamber into the reaction chamber of said device, and
- thermally treating said fluid sample in said reaction chamber of said device, or/and
- monitoring a property of said fluid sample in the chamber of said device, and using a change of said property for the analysis of said fluid sample or components thereof.

17. The method according to claim 16, wherein said step of introducing said fluid sample comprises
- eluting components of said fluid sample from a porous material contained in a binding chamber and leading said eluted fluid through a channel into said reaction chamber.
